# EUROPEAN PATENT APPLICATION

(11) **EP 3 517 948 A1**
(43) Date of publication of application: **31.07.2019**
(21) Application number: 19153834.7
(22) Date of filing: 25.01.2019
(51) Int. Cl.: G01N 30/16, G01N 30/12

(54) **ANALYTICAL DEVICE**

(30) Priority: 29.01.2018 JP 2018013051
(71) Applicant: Shimadzu Corporation, Kyoto 604-8511 (JP)
(72) Inventor: MIYAMOTO, Ayaka, Kyoto-shi,, Kyoto 6048511 (JP); WADA, Toyohito, Kyoto-shi,, Kyoto 6048511 (JP)
(74) Representative: Mewburn Ellis LLP

(57) **Abstract**

An analytical device (10) includes: a sample vaporization chamber (20,200) into which a sample is injected and which, if the sample is a liquid sample, vaporizes the liquid sample; a first temperature regulation unit (28a) and a second temperature regulation unit (28b) that regulate a temperature of the sample vaporization chamber under control of a temperature control unit (410); and a detection unit (13) that detects the sample separated by a separation column that is connected with the sample vaporization chamber (20,200) and separates the sample in a gas phase.

## Description

### INCORPORATION BY REFERENCE

The disclosure of the following priority application is herein incorporated by reference: Japanese Patent Application No. 2018-013051 filed January 29, 2018

### TECHNICAL FIELD

The present invention relates to an analytical device.

### BACKGROUND ART

In gas chromatography, a sample in the gas phase (hereafter, referred to as "sample gas") is introduced into a separation column via a sample vaporization chamber and each component of the sample gas is separated in the separation column. To efficiently introduce various sample gases with different boiling temperatures into the separation column or to more precisely separate the respective components of the sample gas in the separation column, a method of regulating the temperature of the sample vaporization chamber has been proposed.

For instance, the method described in PTL1 uses a sample vaporization chamber provided with heat conducting blocks at least one of which has a divided structure and with a member that regulates gaps between the divided blocks.

### CITATION LIST

### PATENT LITERATURE

PTL1: JP 2005-10102 A

### SUMMARY OF INVENTION

### TECHNICAL PROBLEM

The method described in PTL1 above has a certain restriction in, for instance, the structure of the sample vaporization chamber since the gap between the heat conducting blocks is to be regulated. A further proposal is needed for regulating the temperature of the sample vaporization chamber.

### SOLUTION TO PROBLEM

According to the 1st aspect of the present invention, an analysis device comprises: a sample vaporization chamber into which a sample is injected and which, if the sample is a liquid sample, vaporizes the liquid sample; a first temperature regulation unit and a second temperature regulation unit that regulate a temperature of the sample vaporization chamber; and a detection unit that detects the sample separated at a separation column that is connected with the sample vaporization chamber and separates the sample in a gas phase.

According to the 2nd aspect of the present invention, in the analysis device according to the 1st aspect, it is preferred that the first temperature regulation unit regulates a temperature of a first part of the sample vaporization chamber; and the second temperature regulation unit regulates a temperature of a second part, which is different from the first part, of the sample vaporization chamber.

According to the 3rd aspect of the present invention, in the analysis device according to the 2nd aspect, it is preferred that the first temperature regulation unit is capable of performing regulation so as to increase and/or decrease the temperature of the first part; and the first part is arranged at a position farther from the separation column than the second part is.

According to the 4th aspect of the present invention, in the analysis device according to the 3rd aspect, it is preferred that the second temperature regulation unit is capable of performing regulation so as to increase and/or decrease the temperature of the second part.

According to the 5th aspect of the present invention, in the analysis device according to the 4th aspect, it is preferred that the second temperature regulation unit increases the temperature of the second part by using heat generated by a heater.

According to the 6th aspect of the present invention, in the analysis device according to the 4th or 5th aspect, it is preferred that the second temperature regulation unit decreases the temperature of the second part by using a cooling mechanism and/or an incombustible liquefied gas.

According to the 7th aspect of the present invention, in the analysis device according to any one of the 4th to 6th aspects, it is preferred that the first temperature regulation unit regulates the temperature of the first part via a first heat conductor facing the first part; and the second temperature regulation unit regulates the temperature of the second part via a second heat conductor that faces the second part.

According to the 8th aspect of the present invention, in the analysis device according to the 7th aspect, it is preferred that the second temperature regulation unit blows, by using a fan, a gas heated by a heater and/or a gas cooled by using a cooling mechanism and/or an incombustible liquefied gas against the second heat conductor to cool the second part.

According to the 9th aspect of the present invention, in the analysis device according to the 7th or 8th aspect, it is preferred that the first heat conductor and the second heat conductor, respectively, include a metal block at which a temperature sensor is arranged.

According to the 10th aspect of the present invention, it is preferred that the analysis device according to any one of the 2nd to 9th aspects further comprises: an input unit that receives the preset temperatures of the first part and the second part, respectively.

According to the 11th aspect of the present invention, it is preferred that the analysis device according to any one of the 1st to 10th aspects further comprises: a gas chromatograph.

### ADVANTAGEOUS EFFECTS OF INVENTION

The present invention enables precise regulation of the temperature of the sample vaporization chamber; for instance, it allows for separately regulating the temperatures of a plurality of parts of the sample vaporization chamber.

### BRIEF DESCRIPTION OF DRAWINGS

FIG. 1 is a diagram illustrating a schematic configuration of an analytical device according to a first embodiment
FIG. 2 is a diagram illustrating a schematic configuration of a sample introduction unit of the analytical device according to the first embodiment.
FIG. 3 is an example of a flowchart illustrating a series of processes of an analysis method related to the analytical device according to the first embodiment.
FIG. 4 is a diagram illustrating a schematic configuration of a sample introduction unit of an analytical device according to a second embodiment.
FIG. 5 is a diagram illustrating a schematic configuration of a sample introduction unit of an analytical device according to a third embodiment.
FIG. 6 is a diagram illustrating a schematic configuration of a sample introduction unit of an analytical device according to a fourth embodiment and schematically illustrating a method of heating the sample introduction unit.
FIG. 7 is a diagram schematically illustrating a method of cooling the sample introduction unit of the analytical device according to the fourth embodiment.

### DESCRIPTION OF EMBODIMENTS

Embodiments of the present invention will be described below with reference to the drawings.

### First Embodiment

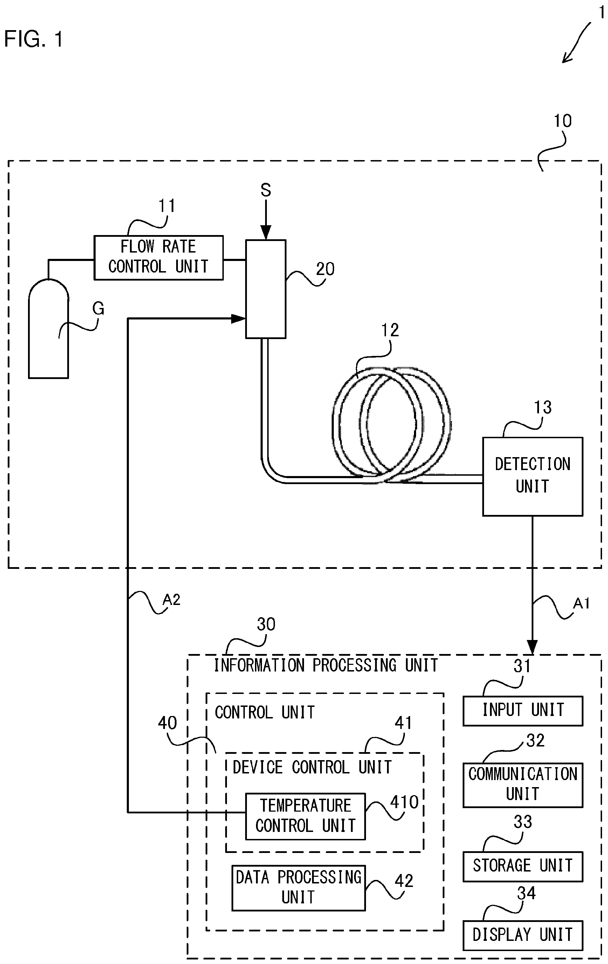

FIG. 1 is a diagram illustrating a schematic configuration of the analytical device (analyzer) of this embodiment. The analytical device 1 is a gas chromatograph that includes a measurement unit 10 and an information processing unit 30.

The measurement unit 10 includes a carrier gas storage container G, a flow rate control unit 11, a sample introduction unit 20 into which a sample S is injected, a separation column 12, and a detection unit 13.

The information processing unit 30 includes an input unit 31, a communication unit 32, a storage unit 33, a display unit 34, and a control unit 40. The control unit 40 includes a device control unit 41 and a data processing unit 42. The device control unit 41 includes a temperature control unit 410.

The measurement unit 10 separates components contained in the sample S based on their physical and/or chemical properties. The sample S in the gas phase is separated at the separation column 12. As described above, the sample S in the gas phase is referred to as a sample gas.

The carrier gas storage container G in the separation unit 10 stores a carrier gas. Although it is preferred that the composition of the carrier gas contains a gas that has low reactivity, this composition is not limited to this gas and hydrogen, helium, and nitrogen gases and so on may be selected and used as appropriate. The carrier gas that flows out from the carrier gas storage container G is introduced into the flow control unit 11.

The flow rate control unit 11 of the separation unit 10 includes a flow regulator that is provided with a pressure governor, a flow control valve, a pressure gauge, and a flowmeter and so on as appropriate and controls the flow rate of the carrier gas. The carrier gas that flows out from the flow rate control unit 11 is introduced into the sample introduction unit 20.

The sample introduction unit 20 of the separation unit 10 introduces the sample S injected thereinto into the separation column 12.

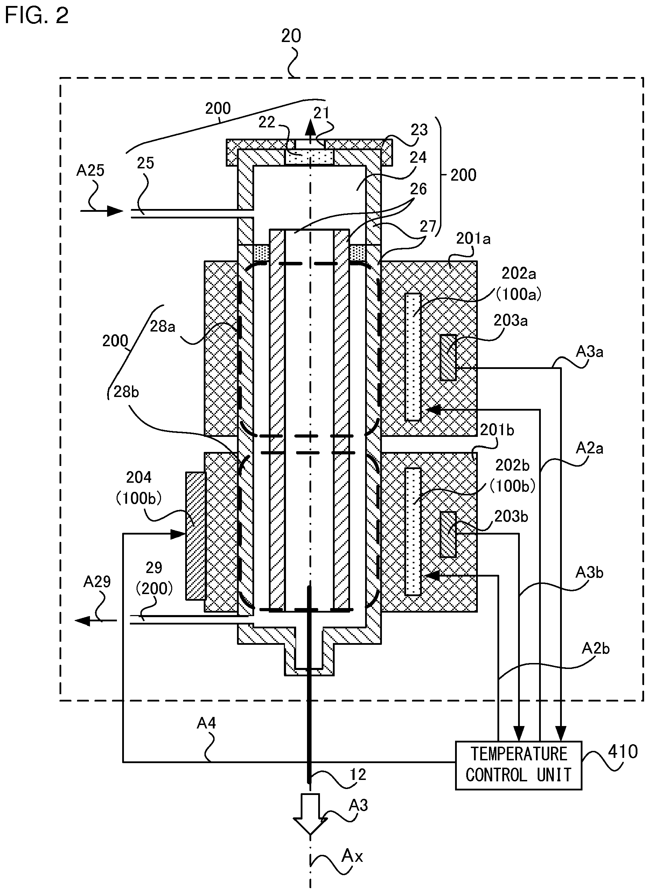

FIG. 2 is a cross-sectional view schematically illustrating the configuration of the sample introduction unit 20. The sample introduction unit 20 includes a sample vaporization chamber 200, a first heat conductor 201a, a second heat conductor 201b, a first heating unit 202a, a second heating unit 202b, a first thermocouple 203a, a second thermocouple 203b, and a cooling unit 204.

The sample vaporization chamber 200 includes an opening 21, a septum 22, a septum gland nut 23, a hollow portion 24, a carrier gas passage 25, an insert 26, a side wall 27, and a split passage 29. Apart that constitutes the sample vaporization chamber 200 and has a side wall, at least a portion of which faces the first heat conductor 201a, is defined to be a first part 28a. On the other hand, a part that constitutes the sample vaporization chamber 200 and has a side wall, at least a portion of which faces the second heat conductor 201b, is defined to be a second part 28b. The first part 28a is arranged at a position farther from the separation column 12, in particular from an end of the separation column 12 on the side of the sample vaporization chamber, than the second part 28b is.

The sample S is stored in a syringe such as a microsyringe or a syringe for a gas. A needle of the syringe is inserted into the hollow portion 24 of the sample vaporization chamber 200 through the opening 21 of the septum gland nut 23 and the septum 22 and the sample S is injected into the hollow portion 24 of the sample vaporization chamber 200 via the needle. The sample S injected into the sample vaporization chamber 200 remains in the inside of the insert 26, such as a glass insert, which is a cylindrical glass pipe. Note that the sample S that is collected by a headspace method, a purge & trap method or the like may be injected in the gas phase into the sample vaporization chamber 200.

The sample vaporization chamber 200 is configured to introduce the injected sample S into the separation column 12 under conditions such as temperature and speed and so on that are preset. When introducing the sample S into the separation column 12, it may occur that the introduced sample S will spread in the direction along a long axis of the separation column 12 (an alternate long and short dash line Ax in FIG. 2) near an inlet of the separation column 12 on the side of the sample vaporization chamber. If this occurs, the separation column 12 will separate each component of the sample S with decreased separation capability. As a result, obtained chromatograms will have a wider peak width to decrease the detection accuracy of the detecting unit 13.

To cope with this, for instance, recondensation of the sample S vaporized at the sample vaporization chamber 200 being performed near the inlet of the separation column 12 on the side of the sample vaporization chamber will enable an increase in the separation capability. To achieve this, a conventional method involves setting the preset temperature of an oven or the like, which regulates the temperature of the separation column 12, to a temperature lower than the temperature of the sample vaporization chamber so as to cool a column connection side of the sample vaporization chamber 200 to a temperature as low as possible. However, this method has a limit in regulating the temperature of each part of the sample vaporization chamber 200.

The analytical device 1 according to this embodiment is configured so that the respective temperatures of the first part 28a and the second part 28b of the sample vaporization chamber 200 are adjusted by a plurality of mutually different temperature regulation units. The temperature of the first part 28a is regulated so that it is increased by a first heating unit 202a and it is decreased by natural cooling, i.e., cooling by radiating heat to ambient air. The temperature of the second part 28b is regulated so that it is increased by the second heating unit 202b and it is decreased by the cooling unit 204. That is, the first heating unit 202a constitutes a first temperature regulation unit 100a that regulates the temperature of the first part 28a, and the second heating unit 202b and the cooling unit 204 constitute a second temperature regulation unit 100b that regulates the temperature of the second part 28b.

The first heating unit 202a includes a heat generator such as a heater and heats the first heat conductor 201a under control of the temperature control unit 410. The first heat conductor 201a includes a metal block or the like that contains a metal such as aluminum as a main component and is arranged in contact with the first heating unit 202a and the first thermocouple 203a. The first heat conductor 201a transmits the heat generated at the first heating unit 202a to the first part 28a of the sample vaporization chamber 200.

The second heating unit 202b includes a heat generator such as a heater and heats the second heat conductor 201b under control of the temperature control unit 410. The cooling unit 204 includes a heat absorber such as a Peltier element and cools the second heat conductor 201b under control of the temperature control unit 410. The second heat conductor 201b includes a metal block or the like that contains a metal such as aluminum as a main component and is arranged in contact with the second heating unit 202b, the cooling unit 204, and the second thermocouple 203b. The second heat conductor 201b transmits the heat generated at the second heating unit 202b to the second part 28b of the sample vaporization chamber 200 and also transmits the heat generated at the second part 28b to the cooling unit 204.

The carrier gas passage 25 allows flow of a carrier gas, the flow rate of which is controlled by the flow rate control unit 11 (FIG. 1) (in FIG. 2, the flow of the carrier gas is schematically indicated with an arrow A25). A portion of the carrier gas is discharged together with a low molecular silicone and a plasticizing agent that are released from the septum 22, via a non-illustrated purge passage that is provided near the septum 22. A portion of the sample gas remaining in the insert 26 is discharged from the split passage 29 at a preset split ratio and the remainder is introduced into the separation column 12. The flow of the sample gas introduced into the separation column 12 is schematically indicated with an arrow A3 and the flow of the gas discharged from the split passage 29 is schematically indicated with an arrow A29. Note that the analytical device 1 according to this embodiment can be applied to an injection method other than the split injection method. It can be suitably used in particular in the splitless injection method.

In FIG. 1, the separation column 12 of the measurement unit 10 includes a column such as a capillary column or a packed column. The capillary column has a sample load capacity that is lower than that of the packed column so that it is highly necessary to prevent spreading of each component of the sample gas when the sample gas is introduced thereinto. Therefore, the analytical device 1 according to this embodiment is more suitable to the capillary column. Each component of the sample gas is separated based on the partition coefficient between a mobile phase containing the carrier gas and a stationary phase of the separation column 12. The components of the sample gas flow out from the separation column 12 at different times, respectively, and are introduced into the detection unit 13.

The detection unit 13 includes any detectors to be used for gas chromatographs, such as a flame ionization detector, a thermal conductivity detector, an electron capture detector, a thermo-ionic detector, a flame photometric detector, a pulsed flame photometric detector, a chemiluminescence detector, a photoionization detector, and atomic emission detector. The detection unit 13 detects the respective components of the sample gas, which have been separated at the separation column 12 and flow out from the separation column 12 at different times, causes the obtained detection signals to be digitized by an non-illustrated A/D converter, and outputs the resultant digitized signals to the information processing unit 30 (arrow A1). Note that the analytical device 1 may be configured, for instance, as a gas chromatograph - mass spectrometer or a gas chromatograph - Fourier transform infrared spectrophotometer by using a device that can be connected with a gas chromatograph such as a mass spectrometer or a Fourier transform infrared spectrophotometer.

The information processing unit 30 includes an information processing device such as a computer and has an interface with a user. It performs various types of processing such as communication, storage, and arithmetic operation relating to various data. Note that the information processing unit 30 may be configured to be a single device integrated with the measurement unit 10. A portion of the data to be used by the information processing unit 30 may be stored at a remote server or the like and a part of arithmetic operation to be performed by the information processing unit 30 may be performed at a remote server or the like.

The input unit 31 includes an input device such as a mouse, a keyboard, various types of buttons and/or a touch panel. Hereinafter, the temperature set by the user for the first part 28a of the sample vaporization chamber 200 is defined to be a first preset temperature and the temperature set by the user for the second part 28b of the sample vaporization chamber 200 is defined to be a second preset temperature. The input unit 31 receives from the user information necessary for controlling the operation of the measurement unit 10, such as a first preset temperature and a second preset temperature, and information necessary for processing performed by the control unit 40.

The communication unit 32 includes a communication device that can communicate via wireless connection or wired connection, such as the Internet, and transmits data obtained by analysis of data or the like, such as chromatogram constructed by the data processing unit 42, and transmits/receives necessary data as appropriate.

The storage unit 33 is constituted by a nonvolatile storage medium and stores measurement conditions such as the first preset temperature and the second preset temperature mentioned above, measurement data based on detection signals from the detection unit 13, a program to be executed by the control unit 40, and the data obtained by analyses.

The display unit 34 includes a display monitor or the like such as a liquid crystal monitor and displays on the display monitor the measurement conditions such as the first preset temperature and the second preset temperature mentioned above, measurement data based on the detection signals from the detection unit 13, and the data obtained by analyses.

The display unit 34 displays an entry screen for inputting thereat the first preset temperature and the second preset temperature mentioned above to facilitate the operation by the user. The user can set the first preset temperature and the second preset temperature by inputting a numerical value in a text box displayed on the entry screen or operating an icon such as a scroll bar as appropriate to select the numerical value. Note that a configuration may be adopted in which the storage unit 33 stores data corresponding to the first preset temperature and the second preset temperature mentioned above according to the measurement conditions and the temperature control unit 410 sets the first preset temperature and the second preset temperature based on the stored data.

The control unit 40 is constituted by a processor such as a CPU and processes the detection signal outputted from the detection unit 13 as measurement data as well as controls the operation of the analytical device 1 including the measurement unit 10.

The device control unit 41 controls the operation of each unit of the measurement unit 10.

The temperature control unit 410 of the device control unit 41 controls the operation of the temperature regulation unit 100a and 100b (FIG. 2) of the sample introduction unit 20. That is, it controls the operations of the first heating unit 202a (first temperature regulation unit 100a), and the second heating unit 202b and the cooling unit 204 (second temperature regulation unit 100b).

The temperature control unit 410 measures an electromotive force generated at the first thermocouple 203a and derives the temperature of the first heat conductor 201a or the temperature of the first part 28a of the sample vaporization chamber 200 based on the measured electromotive force.

The temperature control unit 410 controls the first heating unit 202a so that the temperature of the first heat conductor 201a or the temperature of the first part 28a, which has been derived, will approach the first preset temperature. For instance, when the temperature of the first heat conductor 201a or the temperature of the first part 28a, which has been derived, is lower than the first preset temperature, the temperature control unit 410 performs a control so as to increase the amount of heat generation of the first heating unit 202a. On the contrary, when the temperature of the first heat conductor 201a or the temperature of the first part 28a, which has been derived, is higher than the first preset temperature, the temperature control unit 410 performs a control so as to decrease the amount of heat generation of the first heating unit 202a. In FIG. 2, acquisition of information about temperature by the temperature control unit 410 using the first thermocouple 203a is schematically indicated with an arrow A3a. The control of the first heating unit 202a by the temperature control unit 410 is schematically indicated with an arrow A2a.

The temperature control unit 410 measures the electromotive force generated at the second thermocouple 203b and derives the temperature of the second heat conductor 201b or the temperature of the second part 28b of the sample vaporization chamber 200 based on the measured electromotive force.

The temperature control unit 410 controls the second heating unit 202b and the cooling unit 204 so that the temperature of the second heat conductor 201b or the temperature of the second part 28b, which has been derived, can approach the second preset temperature. For instance, when the temperature of the second heat conductor 201b or the temperature of the second part 28b, which has been derived, is lower than the second preset temperature, the temperature control unit 410 performs a control so as to increase the amount of heat generation of the second heating unit 202a or to decrease the amount of heat absorption of the cooling unit 204. On the contrary, when the temperature of the second heat conductor 201b or the temperature of the second part 28b, which has been derived, is higher than the second preset temperature, the temperature control unit 410 performs a control so as to decrease the amount of heat generation of the second heating unit 202b or to decrease the amount of heat absorption of the cooling unit 204. In FIG. 2, acquisition of information about temperature by the temperature control unit 410 using the second thermocouple 203b is schematically indicated with an arrow A3b. The control by the temperature control unit 410 of the second heating unit 202b and the cooling unit 204 is schematically indicated with arrows A2b and A4, respectively.

The data processing unit 42 of the control unit 40 (FIG. 1) processes and analyzes the detection signal from the detection unit 13 as measurement data. The data processing unit 42 constructs data that corresponds to chromatogram by correlating the intensity of the detection signal to retention time and causes the obtained data to be stored at the storage unit 33. The data processing unit 42 identifies each component of the sample gas that corresponds to each peak of the chromatogram thus obtained based on the retention time corresponding to each peak referring to the past data or the like. The data processing unit 42 calculates the peak intensity of each peak or area corresponding to each peak to determine the quantity of each component of the sample gas. The data processing unit 42 generates a display image that displays the data of the constructed chromatogram and information obtained by analysis, and causes the display unit 34 to display the display image thereat.

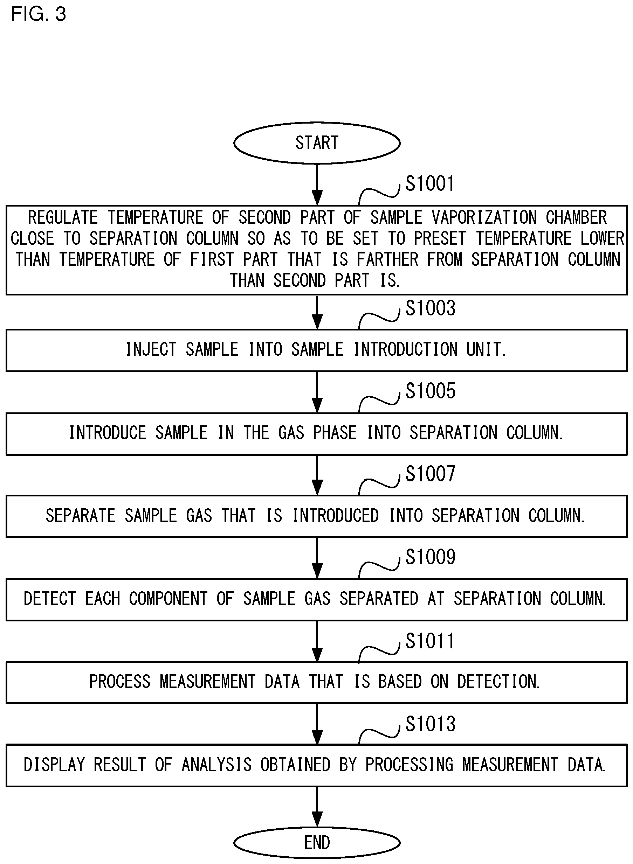

FIG. 3 is a flowchart illustrating a series of processes of the analysis method according to this embodiment. In step S1001, the first temperature regulation unit 100a and the second temperature regulation unit 100b regulates the temperature of the second part 28b of the sample vaporization chamber 200, which part is close to the separation column 12, to a preset temperature lower than that of the first part 28a of the sample vaporization chamber 200, which is farther from the separation column 12 than the second part 28b is. When the step S1001 is completed, a step S1003 is started. In the step S1003, the user injects the sample S into the sample introduction unit 20. When the step S1003 is completed, a step S1005 is started. Note that, in the flowchart illustrated in FIG. 3, to make narrower the peak widths of the chromatogram to increase the detection accuracy, the preset temperature of the second part 28b (second preset temperature) is set lower than the preset temperature of the first part 28a (first preset temperature) so that the sample gas can be recondensed. However, the first preset temperature and the second preset temperature may be set to appropriately selected temperatures as necessary. For instance, the second preset temperature is set to a temperature higher than the first preset temperature or the second preset temperature is set to the same temperature as the first preset temperature.

In the step S1005, the sample introduction unit 20 introduces the sample S in the gas phase (sample gas) into the separation column 12. When the step S1005 is completed, a step S1007 is started. In the step S1007, the separation column 12 separates the sample gas introduced into the separation column 12. When the step S1007 is completed, a step S1009 is started.

In the step S1009, the detection unit 13 detects each component of the sample gas separated at the separation column 12. When the step S1009 is completed, a step S1011 is started. In the step S1011, the data processing unit 42 processes the measurement data based on the detection in the step S1011. When the step S1011 is completed, a step S1013 is started.

In the step S1013, the display unit 34 displays an analysis result obtained by processing the measurement data in the step S1011. When the step S1013 is completed, the processing is terminated.

The above-mentioned embodiment provides the following operations and effects.
(1) The analytical device according to this embodiment includes the first temperature regulation unit 100a and the second temperature regulation unit 100b that regulate the temperature of the sample vaporization chamber 200. This configuration enables accurate regulation of the temperature of the sample vaporization chamber 200.
(2) In the analytical device according to this embodiment, the first temperature regulation unit 100a regulates the temperature of the first part 28a of the sample vaporization chamber 200 and the second temperature regulation unit 100b regulates the temperature of the second part 28b of the sample vaporization chamber 200, which is different from the first part 28a. This configuration enables regulation of the temperatures of a plurality of parts of the sample vaporization chamber 200, respectively. Note that the second part 28b, which is "different from" the first part 28a, as used herein includes the case in which the first part 28a and the second part 28b have no overlap therebetween as in this embodiment and in addition the case in which the first part 28a and the second part 28b have an overlapped part therebetween but they are mutually different parts of the sample vaporization chamber 200.
(3) In the analytical device according to this embodiment, the first temperature regulation unit 100a is capable of regulating the temperature of the first part 28a so as to at least increase, with the first part 28a being arranged at a position farther from the separation column 12 than the second part 28b is. This configuration enables regulation of the temperature of a plurality of parts of the sample vaporization chamber 200 according to their distance from the separation column 12
(4) In the analytical device according to this embodiment, the second temperature regulation unit 100b is capable of regulating the temperature of the second part 28b so as to increase and/or decrease. This configuration enables regulation of the temperature of the part relatively close to the separation column 12 of the sample vaporization chamber 200, which makes it possible to more accurately control recondensation of the sample gas or the like. Accordingly, it is possible to make the peak widths of the chromatogram narrower to increase the detection accuracy.
(5) In the analytical device according to this embodiment, the second temperature regulation unit 100b uses, for instance, a heater as the second heating unit 202b and is capable of increasing the temperature of the second part 28b by using the heat from the heater. This configuration enables regulation of the temperature, in particular when increasing the temperature, of a part of the sample vaporization chamber 200 that is close to the separation column 12 without cumbersome operation or without any increase in cost.
(6) In the analytical device according to this embodiment, the first temperature regulation unit 100a regulates the temperature of the first part 28a via the first heat conductor 201a facing the first part 28a and the second temperature regulation unit 100b regulates the temperature of the second part 28b via the second heat conductor 201b facing the second part 28b, and the second heat conductor 201b is not the first heat conductor 201a. This configuration prevents the sample vaporization chamber 200 from undergoing an abrupt change in temperature due to heat generation by the first heating unit 202a or the second heating unit 202b, or heat absorption by the cooling unit 204 to enable accurate control of the temperature of the sample vaporization chamber 200.
(7) In the analytical device according to this embodiment, the first heat conductor 201a and the second heat conductor 201b include respective metal blocks at which the thermocouples 203a and 203b are arranged, respectively. This configuration enables the temperature control unit 410 to measure the temperatures of the first part 28a and the second part 28b of the sample vaporization chamber 200 and to control the operation of the first temperature regulation unit 100a and the second temperature regulation unit 100b based on the measured temperatures. This makes it possible to more accurately control the temperature of the sample vaporization chamber 200. Note that for measuring the temperature of the first heat conductor 201a and the second heat conductor 201b, a thermocouple and any other temperature sensor may be used.
(8) The analytical device according to this embodiment includes the display unit 34 that displays an entry screen for inputting respective preset temperatures of the first part 28a and the second part 28b. This configuration enables the user to set the preset temperatures of the first part 28a and the second part 28b easily.

The following variations are also contemplated within the scope of the present invention and may be combined with the above embodiments. In the following variations, parts having the same structures and functions as those in the above embodiments will be designated by the same reference numerals and description thereof will be omitted as appropriate.

### First Variation

In the above embodiment, the first heat conductor 201a includes no cooling unit and the first part 28a of the sample vaporization chamber 200 is cooled by natural cooling. However, a configuration may also be adopted in which the first heat conductor 201a includes a cooling unit having a Peltier element or the like and the temperature control unit 410 controls the heat absorption by such cooling unit to decrease the temperature of the first part 28a. This configuration enables more accurate control of the temperature of the side close to the septum 22 of the sample vaporization chamber 200.

### Second Variation

In the above embodiment, the configuration is adopted in which the cooling unit 204 that includes a cooling mechanism using no refrigerant, such as a Peltier element, cools the second part 28b of the sample vaporization chamber 200. However, the second heat conductor 201b may be structured to have no cooling unit 204 to allow the second part 28b to be cooled by natural cooling. This configuration enables prevention of the mechanism of temperature control by the temperature control unit 410 from becoming complicated. Also this configuration makes it possible to decrease the cost and to make the sample introduction unit 20 more compact.

### Second Embodiment

The analytical device according to the second embodiment has a configuration similar to that of the analytical device 1 according to the first embodiment except that the cooling unit that cools the second part 28b of the sample vaporization chamber 200 has a configuration different from that of the counterpart in the first embodiment. Here, the parts that are same as those in the first embodiment are designated with the same reference numerals as those used in the first embodiment and explanation thereof will be omitted as the case may be.

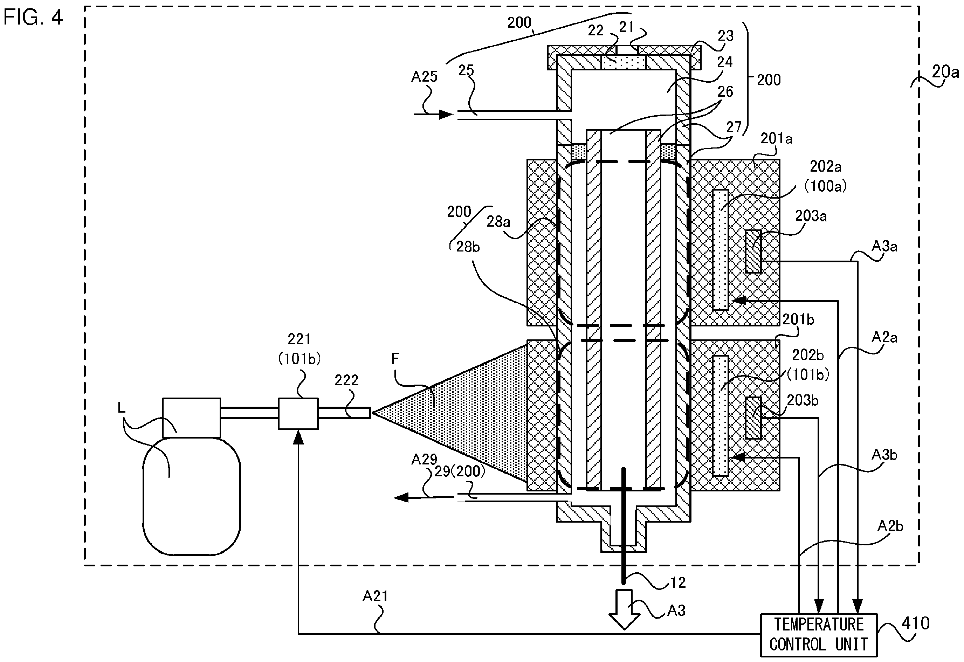

FIG. 4 is a cross-sectional view schematically illustrating the configuration of the sample introduction unit 20a in the analytical device according to the second embodiment. The sample introduction unit 20a includes a refrigerant storage container L that stores a liquid refrigerant including incombustible liquefied gas such as liquefied carbon dioxide or liquefied nitrogen, a refrigerant flow rate regulation unit 221, and a refrigerant outlet 222. The refrigerant stored in the refrigerant storage container L is jetted out from the refrigerant outlet 222 toward the second heat conductor 201b. In FIG. 4, the jetted out refrigerant F is schematically indicated with a triangle. The jetted out refrigerant F contacts the second heat conductor 201b to cool the second heat conductor 201b. The second heat conductor 201b transmits the heat of the second part 28b to the cooled part, thereby decreasing the temperature of the second part 28b. Note that if a cooling effect is obtained, the refrigerant F to be jetted out from the refrigerant outlet 222 may be a liquid other than the liquefied carbon dioxide and the liquefied nitrogen, such as liquefied argon.

The refrigerant flow regulation unit 221 regulates the flow rate of the refrigerant F that flows out from the refrigerant storage container L and is jetted out from the refrigerant outlet 222 toward the second heat conductor 201b. The temperature control unit 410 controls the temperature of the second part 28b by controlling the regulation of the flow rate of the refrigerant F by the refrigerant flow rate regulation unit 221 (Arrow A21). In this embodiment, the refrigerant flow rate control unit 221 constitutes the cooling unit, and the second heating unit 202b and the refrigerant flow rate control unit 221 constitute the second temperature regulation unit 101b.

In the analytical device according to this embodiment, the second temperature regulation unit 101b decreases the temperature of the second part 28b of the sample vaporization chamber 200 with the liquid refrigerant F. In this case, use of the heat absorber preliminary cooled to have a low temperature enables the second part 28b to have a temperature that is decreased more drastically.

### Third Embodiment

The analytical device according to the third embodiment has a configuration similar to that of the analytical device 1 according to the first embodiment but the configuration of the cooling unit that cools the second part 28b of the sample vaporization chamber 200 is different from the configuration of the counterpart in the analytical device according to the first embodiment. Here, the parts that are the same as those in the first embodiment are designated with the same reference numerals as those used in the first embodiment and explanation thereof will be omitted as the case may be.

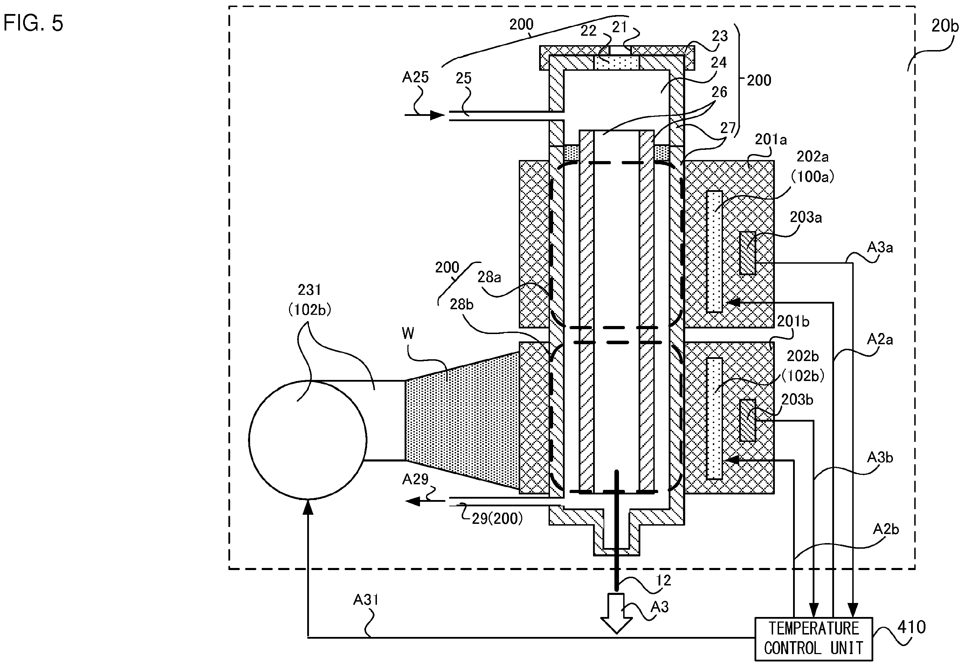

FIG. 5 is a cross-sectional view schematically illustrating the configuration of the sample introduction unit 20b in the analytical device according to the third embodiment. The sample introduction unit 20b includes a fan 231. The fan blows air against the second heat conductor 201b.
In FIG. 5, air W from the fan is schematically indicated with a trapezoid. The air W from the fan receives heat from the second heat conductor 201b to cool the second heat conductor 201b. The second heat conductor 201b transmits the heat of the second part 28b to the cooled part to decrease the temperature of the second part 28b. Note that in FIG. 5, the fan is arranged at a position that is physically remote from the second heat conductor 201b. However, a cooling fan or the like as the fan may be provided on a side surface of the first heat conductor 201b.

The fan 231 controls the quantity of the air W that is blown against the second heat conductor 201b. In this embodiment, the fan 231 constitutes the cooling unit. The second heating unit 202b and the fan 231 constitute the second temperature regulation unit 102b.

In the analytical device according to this embodiment, the second temperature regulation unit 102b decreases the temperature of the second part 28b of the sample vaporization chamber 200 using wind from the fan 231. This configuration enables an efficient decrease in the temperature of the second part 28b without any refrigerant.

### Fourth Embodiment

The analytical device according to a fourth embodiment has a configuration similar to that of the analytical device 1 according to the first embodiment. However, the configuration of the second heating unit that heats the second part 28b of the sample vaporization chamber 200 and the configuration of the cooling unit that cools the second part 28b are different from the configurations of the respective counterparts in the analytical device 1 according to the first embodiment. Here, the parts that are the same as those in the first embodiment are designated with the same reference numerals as those used in the first embodiment and explanation thereof will be omitted as the case may be.

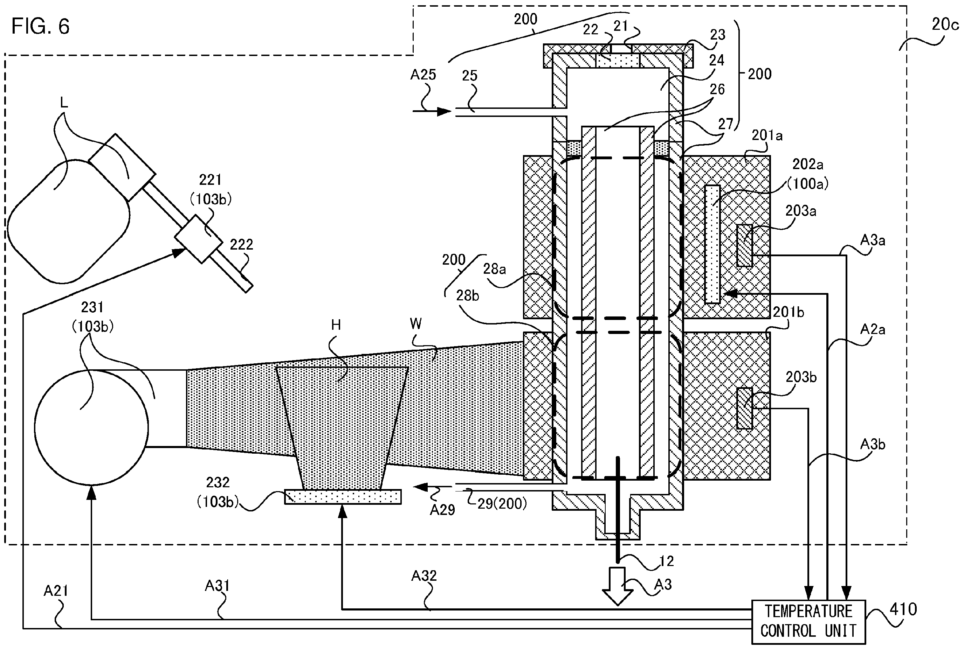

FIG. 6 is a cross-sectional view schematically illustrating the configuration of the sample introduction unit 20c in the analytical device according to the fourth embodiment. The sample introduction unit 20c includes a refrigerant storage container L that stores a liquid refrigerant such as liquefied carbon dioxide or liquefied nitrogen, the refrigerant flow rate regulation unit 221, the refrigerant outlet 222, the fan 231, and the heater 232.

FIG. 6 is a conceptual diagram illustrating the case in which the temperature control unit 410 performs a control so as to increase the temperature of the second part 28b of the sample vaporization chamber 200. The air H heated by the heater 232 is blown by the fan 231 against the second heat conductor 201b to heat the second heat conductor 201b. The second heat conductor 201b transmits heat to the second part 28b of the sample vaporization chamber 200 to increase the temperature of the second part 28b. The temperature control unit 410 performs a control the amount of heat generation by the heater 232 and the power output of the fan 231 to control an increase in the temperature of the second part 28b (as schematically indicated with arrows A32 and A31, respectively).

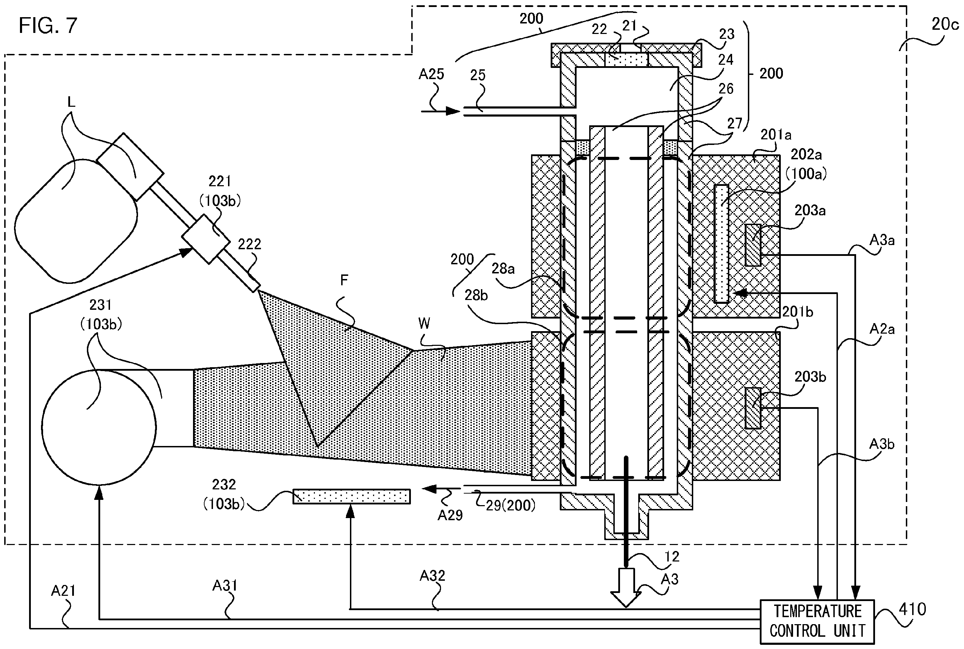

FIG. 7 illustrates the case in which the temperature control unit 410 performs a control so as to decrease the temperature of the second part 28b of the sample vaporization chamber 200. The refrigerant F, which flows out from the refrigerant storage container L and is jetted out from the refrigerant outlet 222, cools air, and this air is blown by the fan 231 against the second heat conductor 201b to cool the second heat conductor 201b. The second heat conductor 201b transmits the heat of the second part 28b of the sample vaporization chamber 200 to the cooled part to decrease the temperature of the second part 28b. The jetting quantity of the refrigerant is regulated by the refrigerant flow rate regulation unit 221. The temperature control unit 410 controls regulation of the flow rate of the refrigerant by the flow rate regulation unit 221 and the power output of the fan 231 to control a decrease in the temperature of the second part 28b (as schematically indicated with arrows A21 and A31, respectively).

In this embodiment, the heater 232 and the fan 231 constitute the heating unit and the refrigerant flow rate regulation unit 221 and the fan 231 constitute the cooling unit. This heating unit and this cooling unit constitute the second temperature regulation unit 103b.

In the analytical device according to this embodiment, the second temperature regulation unit 103b blows the air H heated by the heater 232 and/or the air cooled by the liquid refrigerant F against the second heat conductor 201b by using the fan 231 to cool the second part 28b. This configuration enables controlling the temperature of the second part 28b without arranging any heat source or heat sink at the second heat conductor 201b.

The present invention is not limited to the contents of the above embodiment. Other embodiments contemplated in the technical idea of the present invention are also included within the scope of the present invention.

### REFERENCE SIGNS LIST

1...analytical device, 10...measurement unit, 11...flow rate control unit, 12...separation column, 13...detection unit, 20, 20a, 20b, 20c...sample introduction unit, 28a...first part, 28b...second part, 30...information processing unit, 40...control unit, 41...device control unit, 42...data processing unit, 100a...first temperature regulation unit, 100b, 101b, 102b, 103b...second temperature regulation unit, 200...sample vaporization chamber, 201a...first heat conductor, 201b...second heat conductor, 202a...first heating unit, 202b...second heating unit, 203a, 203b...thermocouple, 204...cooling unit, 221...refrigerant flow rate regulation unit, 222...refrigerant outlet, 231...fan, 232...heater, 410...temperature control unit, F...refrigerant, G...carrier gas storage container, H...heated air, L...refrigerant storage container, S...sample, W...air from a fan

## Claims

1. An analytical device comprising:
a sample vaporization chamber into which a sample is injected and which, if the sample is a liquid sample, vaporizes the liquid sample;
a first temperature regulation unit and a second temperature regulation unit that regulate a temperature of the sample vaporization chamber; and
a detection unit that detects the sample separated at a separation column that is connected with the sample vaporization chamber and separates the sample in a gas phase.

2. The analytical device according to claim 1, wherein:
the first temperature regulation unit regulates a temperature of a first part of the sample vaporization chamber; and
the second temperature regulation unit regulates a temperature of a second part, which is different from the first part, of the sample vaporization chamber.

3. The analytical device according to claim 2, wherein:
the first temperature regulation unit is capable of performing regulation so as to increase and/or decrease the temperature of the first part; and
the first part is arranged at a position farther from the separation column than the second part is.

4. The analytical device according to claim 3, wherein:
the second temperature regulation unit is capable of performing regulation so as to increase and/or decrease the temperature of the second part.

5. The analytical device according to claim 4, wherein:
the second temperature regulation unit increases the temperature of the second part by using heat generated by a heater.

6. The analytical device according to claim 4 or 5, wherein:
the second temperature regulation unit decreases the temperature of the second part by using a cooling mechanism and/or an incombustible liquefied gas.

7. The analytical device according to any one of claims 4 to 6, wherein:
the first temperature regulation unit regulates the temperature of the first part via a first heat conductor facing the first part; and
the second temperature regulation unit regulates the temperature of the second part via a second heat conductor that faces the second part.

8. The analytical device according to claim 7, wherein:
the second temperature regulation unit blows, by using a fan, a gas heated by a heater and/or a gas cooled by using a cooling mechanism and/or an incombustible liquefied gas against the second heat conductor to cool the second part.

9. The analytical device according to claim 7 or 8, wherein:
the first heat conductor and the second heat conductor, respectively, include a metal block at which a temperature sensor is arranged.

10. The analytical device according to any one of claims 2 to 9, further comprising:
an input unit that receives the preset temperatures of the first part and the second part, respectively.

11. The analytical device according to any one of claims 1 to 10, further comprising: a gas chromatograph.
